# EUROPEAN PATENT APPLICATION

(11) **EP 2 437 230 A1**
(43) Date of publication of application: **04.04.2012**
(21) Application number: 10183777.1
(22) Date of filing: 30.09.2010
(51) Int. Cl.: G08C 17/02, H04N 5/44

(54) **TV box/card and remote control receiver device thereof**

(71) Applicant: Avermedia Technologies, Inc., Chung Ho City Taipei Hsien (TW)
(72) Inventor: Yeh, Chien-Ming, Taipei Hsien (TW); Chen, Yu-Hsiang, Taipei Hsien (TW); Lee, Neng-Chia, Taipei Hsien (TW)
(74) Representative: Becker Kurig Straus

(57) **Abstract**

A remote control receiver device, used for being configured on the TV box/card, comprises a receiving antenna, an Rx/Tx module, an MCU module and a connecting member. The MCU module transforms a signal received from the Rx/Tx module into a control signal for controlling the TV box/card. The connecting member is electrical connected to the MUC for transmitting the control signal to the TV box/card, in which the connecting member is satisfied the specification of TRS connector.

## Description

### BACKGROUND

### Field of Invention

The present invention relates to a wireless remote control receiver device. More particularly, the present invention relates to a wireless remote control receiver device of a TV box/card.

### Description of Related Art

The TV box/card enables viewers to watch TV on a computer device, when the TV box/card is connected to the computer device. The TV card is either a built-in device on the computer device, and the TV box is an external device connected on the computer device.

The TV card is a device built-in the computer device. Hence, the TV card is controlled by software installed in the computer device. The software could select the channel received by the TV card.

The TV box could select the channel with the hardware, and send the video/audio signal to the computer device.

However, users wish to wireless control the TV box/card like watching TV. Hence, how to provide a wireless control function for the TV box/card, especially nondirective wireless control function with low cost is an objective of the TV box/card company.

### SUMMARY

In accordance with the foregoing and other objectives of the present invention, a radio frequency remote control receiver device is provided.

The radio frequency remote control receiver device is used for being configured on a TV box/card. The radio frequency remote control receiver device comprises a receiving antenna, an Rx/Tx module, an MCU module, and a connecting member. The receiving antenna receives a radio frequency signal sent out from a wireless radio frequency remote control device. The Rx/Tx module is coupled to the receiving antenna and transforms the radio frequency signal to a receiving signal. The MCU module is coupled to the Rx/Tx module and transforms the receiving signal to a control signal which is used to control the TV box/card. The connecting member is electrically connected to the MCU module and used send the control signal to the TV box/card, wherein the connecting member is satisfied the specification of TRS connector.

A TV box/card device is also provided herein. The TV box/card device comprises a TV box/card and a radio frequency remote control receiver device. The TV box/card has an IR sensor connecting port. The radio frequency remote control receiver device receives a radio frequency signal. The radio frequency remote control receiver device further comprises a connecting member. The connecting member is inserted into the IR sensor connecting port so that the TV box/card is electrically connected to the radio frequency remote control device.

The embodiment of present invention comprises a radio frequency remote control receiver device configured on the TV box/card. Therefore, users can control TV box/card by remote without aim for the receiver device due to the nondirectivity of the radio frequency.

Moreover, when a controller connecting interface (such as IR sensor connecting port) has been configured on the TV box/card, the radio frequency remote control receiver device could install on the controller connecting interface. Then users can nondirective control the TV box/card with low cost.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 is a schematic diagram of system architecture of one embodiment.
Fig. 2 is a schematic diagram of system architecture of one embodiment.
Fig. 3 is a schematic diagram of flow chart of one embodiment.
Fig. 4A and Fig. 4B are schematic diagrams of applications of embodiments.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

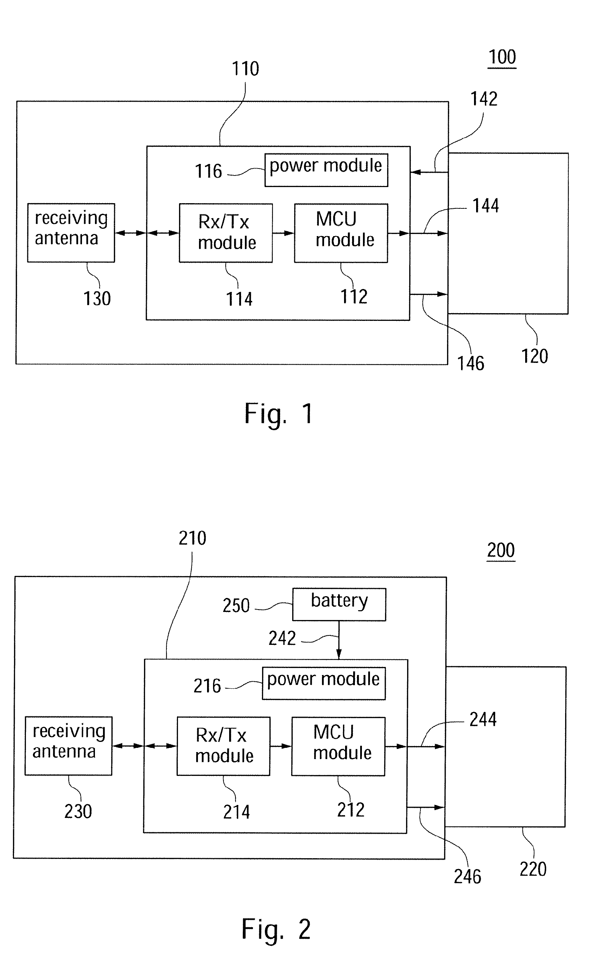

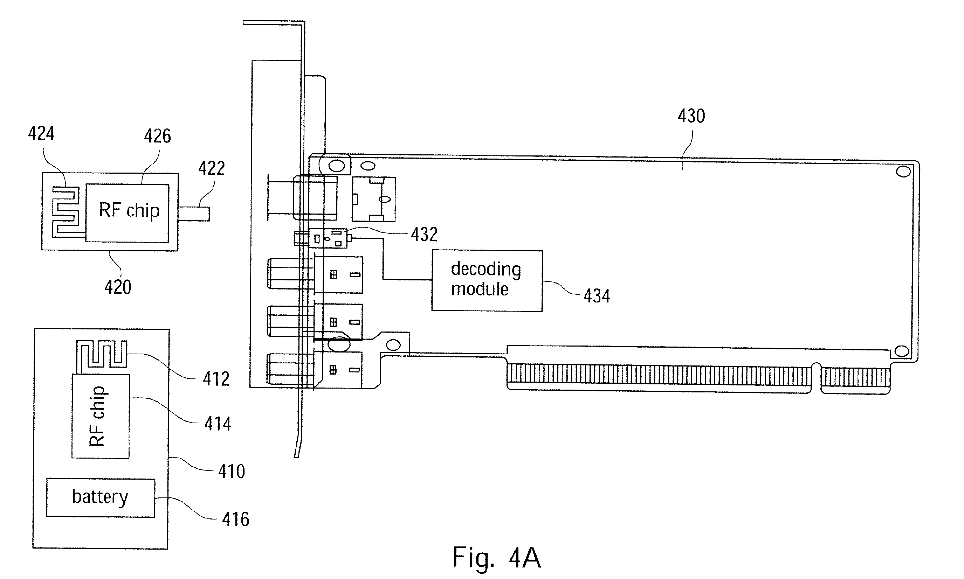

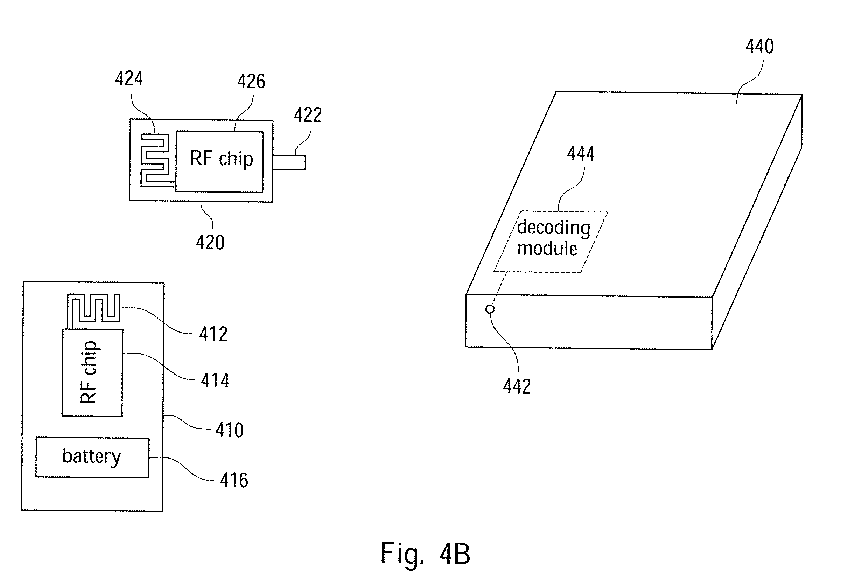

Please refer to Fig. 1. Fig. 1 is a schematic diagram of system architecture of one embodiment of the invention. A radio frequency remote control receiver device 100 of this embodiment is configured on the TV box/card (for example, a TV card 430 shown in Fig. 4A or a TV box shown in Fig. 4B). The radio frequency remote control receiver device 100 comprises a receiving antenna 130, a wireless radio frequency chip 110, and a connecting member 120. The wireless radio frequency chip 110 comprises a Rx/Tx module 114 and a MCU module 112.

The receiving antenna 130 receives a radio frequency signal sent from the wireless radio frequency remote control device (for example a wireless radio frequency remote control device 410 shown in Fig. 4A). The Rx/Tx module 114 is coupled to the receiving antenna 130, and transforms the radio frequency signal to a received signal. The MCU module 112 is couple to the Rx/Tx module 114, and transforms the received signal to a control signal 144 to control TV box/card. The connecting member 120 is electrically connected to the MCU member112 and sends the control signal 144 to the TV box/card.

In this embodiment, the Rx/Tx module 144 amplifies the radio frequency signal to the received signal, and sends the received signal to the MCU module 112.

In some situations, the MCU module 112 could code the control signal 144 first, then send the coded control signal to a decoding module of the TV box/card (for example a decoding module 434, 444 shown in Fig. 4A and Fig. 4B) by connecting member 120. The codec of the MCU module 112 corresponds to the decoding module of the TV box/card, so that the decoding module can decode the coded control signal and control the TV box/card. Therefore, the radio frequency remote control receiver device 100 can be limited to use with specific TV box/cards. The incompatibility between the radio frequency remote control receiver device 100 and TV box/card (for example the incompatible definition control signal in different company made TV box/cards) can be avoided. Moreover, the TV box/card company can optimize the radio frequency remote control receiver device 100 with the TV box/card. Then the control efficiency between the radio frequency remote control receiver device 100 and the TV box/card can be increased.

Moreover, the wireless radio frequency chip 100 of the embodiment further comprises a power module 116. The power module 116 transforms the power source signal 142 of the TV box/card to the operating power of the radio frequency remote control receiver device 100. Hence, the connecting member 120 also sends the power source signal 142 and ground signal 164.

Please refer to Fig. 2. Fig. 2 is a schematic diagram of system architecture of one embodiment. The radio frequency remote control receiver device 200 is almost same to the foregoing embodiment. The radio frequency remote control receiver device 200 comprises a wireless radio frequency chip 210, receiving antenna 230 and a connecting member 220. The wireless radio frequency chip 210 comprises Rx/TX module 210, MCU module 212 and power module 216. The connection and function of foregoing elements of this embodiment are almost same to the embodiment described above, and not detail described herein.

It is important to note that the radio frequency remote control receiver device 200 further comprises a battery 250 in this embodiment. The battery 250 provides the operating power of the radio frequency remote control receiver device 200. Therefore, the power module 216 is transforms the power source signal 242 of the battery 250 to the operating power of the radio frequency remote control receiver device 200. The control signal 244 and the ground signal 246 are transmitted by the connecting member 220 in this embodiment.

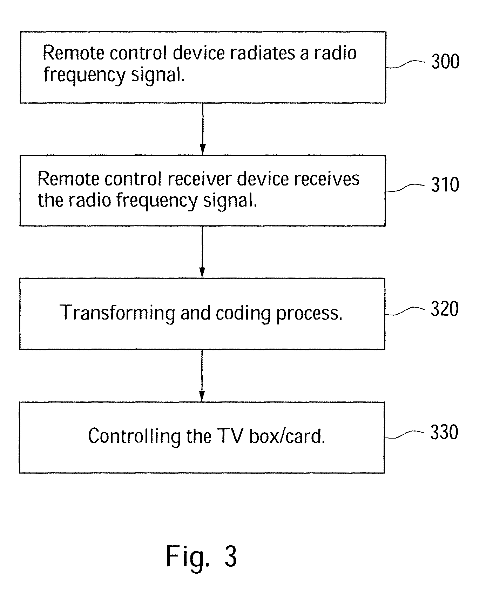

In order to more detail describe the control process of the radio frequency remote control receiver device, please refer to Fig. 3. Fig. 3 is a schematic diagram of flow chart of the control process. First, in step 300, the wireless radio frequency remote control device radiates a radio frequency signal. In step 310, the radio frequency remote control receiver device receives the radio frequency signal. In step 320, the radio frequency remote control receiver device transforms the radio frequency signal and/or codes the transformed radio frequency signal. Finally, in step 330, the transformed/coded radio frequency signal is sent to control the TV box/card.

Please refer to Fig. 4A and Fig. 4B together. Fig. 4A and Fig. 4B are schematic diagrams of applications of embodiments. A wireless radio frequency remote control device 410 comprises a remote antenna 412, wireless radio frequency chip 414 and a battery 416. The TV box/card 430, 440 comprise controller connecting interface 432, 442 respectively. The radio frequency remote control receiver device 420 has receiving antenna 424, wireless radio frequency chip 426 and connecting member 422.

The battery 416 of the wireless radio frequency remote control device 410 provides the operating power of the wireless radio frequency remote control device 410. The wireless radio frequency chip 414 is used to process the control signal to the radio frequency signal. Then, the radio frequency signal is radiated by the remote antenna 412.

The radio frequency remote control receiver device 420 receives the radio frequency signal radiated from the wireless radio frequency remote control device 410. The radio frequency signal is transformed to the control signal to control TV box/card 430, 440 by the wireless radio frequency chip 426. The connecting member 422 corresponds to the controller connecting interface 432, 442, so that the radio frequency remote control receiver device 420 is electrically connected to the TV box/card 430, 440 through the connecting member 422.

In some situations, the controller connecting interface 432, 442 is arranged to connect to the IR sensor. The IR sensor can receive IR signals emitted from an IR remote controller and transform the IR signal to the control signal. Therefore, the controller connecting interface 432, 442 is an IR sensor connecting ports in that situation. Hence, the connecting member 422 of the radio frequency remote control receiver device 420 can be designed to correspond to the IR sensor, so that the radio frequency remote control receiver device 420 could inset into the controller connecting interface 432, 442 to control the TV box/card 430, 440 by the wireless radio frequency remote control device 410.

When the IR sensor connecting port is satisfied the TRS connector specification, the connecting member 422 also satisfies the TRS connector specification. In addition, the IR sensor connecting port is female connector, and the connecting member 422 is male connector.

Moreover, the specification of the controller connecting interface 432, 442, and the connecting member 422 are limited to the embodiment described above. The designer could consider the bandwidth and cost to change the specification. However, the connecting member 422 must be electrically connected to the controller connecting interface 432, 442 to transmit the control signal.

The receiving antenna 424 and remote antenna 412 are circuit board antennas to reduce cost and dimension of the radio frequency remote control receiver device 420 and the wireless radio frequency remote control device 410 in this embodiment. In other embodiment, the antenna could be realized by other manufacture according to a variety of consideration.

The embodiment of present invention comprises a radio frequency remote control receiver device configured on the TV box/card. Therefore, users can control TV box/card by remote without aim for the receiver device due to the nondirectivity of the radio frequency. Moreover, when a controller connecting interface (such as IR sensor connecting port) has been configured on the TV box/card, the radio frequency remote control receiver device could install on the controller connecting interface. Then users can nondirective control the TV box/card with low cost.

When the TV box/card has a decoding module, the radio frequency remote control receiver device could code the control signal corresponding to the decoding module. Therefore, the radio frequency remote control receiver device can be limited to use with specific TV box/cards. The incompatibility between the radio frequency remote control receiver device and TV box/card (for example the incompatible definition control signal in different company made TV box/cards) can be avoided. Moreover, the TV box/card company can optimize the radio frequency remote control receiver device with the TV box/card. Then the control efficiency between the radio frequency remote control receiver device and the TV box/card can be increased.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims.

## Claims

1. A radio frequency remote control receiver device used for being configured on a TV box/card, comprising:
a receiving antenna capable of receiving a radio frequency signal sent out from a wireless radio frequency remote control device;
an Rx/Tx module coupled to the receiving antenna and capable of transforming the radio frequency signal to a receiving signal;
a MCU module coupled to the Rx/Tx module and capable of transforming the receiving signal to a control signal used to control the TV box/card; and
a connecting member electrically connected to the MCU module and capable of sending the control signal to the TV box/card, wherein the connecting member is satisfied the specification of TRS connector.

2. The device of claim 1, wherein the connecting member is a male contact of TRS connector.

3. The device of claim 1, wherein the MCU module further coding the control signal for the corresponded decoding module configured in the TV box/card.

4. The device of claim 1 further comprising a power module capable of transforming a power source signal of the TV box/card to an operating power of the device.

5. The device of claim 1 further comprising a battery capable of providing the operating power of the device.

6. a TV box/card device comprising:
a TV box/card having an IR sensor connecting port; and
a radio frequency remote control receiver device capable of receiving a radio frequency signal, the radio frequency remote control receiver device further comprising:
a connecting member inserted into the IR sensor connecting port so that the TV box/card is electrically connected to the radio frequency remote control device.

7. The device of claim 6, wherein the radio frequency remote control receiver device transforms the radio frequency signal to a control signal of the TV box/card.

8. The device of claim 7, wherein the TV box/card further comprises a decoding module, the radio frequency remote control receiver device coding the control signal corresponded to the decoding module.

9. The device of claim 6, wherein the radio frequency remote control receiver device further comprises a battery capable of providing a operating power of the radio frequency remote control receiver device.
